(19) Europäisches Patentamt / European Patent Office / Office européen des brevets

(11) **EP 3 526 551 B1**

(12) **FASCICULE DE BREVET EUROPEEN**

(45) Date de publication et mention
de la délivrance du brevet:
**26.08.2020 Bulletin 2020/35**

(21) Numéro de dépôt: **17781092.6**

(22) Date de dépôt: **06.10.2017**

(51) Int Cl.:
***G01C 25/00*** *(2006.01)*

(86) Numéro de dépôt international:
**PCT/EP2017/075547**

(87) Numéro de publication internationale:
**WO 2018/069191 (19.04.2018 Gazette 2018/16)**

(54) **PERFECTIONNEMENTS AUX PROCÉDÉS D'ALIGNEMENT DE CENTRALE INERTIELLE**

VERBESSERUNGEN AN VERFAHREN ZUR AUSRICHTUNG VON
TRÄGHEITSNAVIGATIONSSYSTEMEN

IMPROVEMENTS TO METHODS FOR ALIGNING INERTIAL NAVIGATION SYSTEMS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.10.2016 FR 1659806**

(43) Date de publication de la demande:
**21.08.2019 Bulletin 2019/34**

(73) Titulaire: **Safran Electronics & Defense
92100 Boulogne-Billancourt (FR)**

(72) Inventeur: **DEMANGE, Jean Luc
92100 Boulogne-Billancourt (FR)**

(74) Mandataire: **Regimbeau
20, rue de Chazelles
75847 Paris Cedex 17 (FR)**

(56) Documents cités:
**EP-A1- 1 862 764       WO-A1-2011/045032
US-A1- 2014 372 063**

**Description**

**DOMAINE DE L'INVENTION**

La présente invention concerne un procédé d'alignement d'une centrale inertielle située sur un porteur statique ou quasi-statique.

Elle concerne également un système inertiel mettant en oeuvre un tel procédé d'alignement.

**ETAT DE LA TECHNIQUE**

L'initialisation d'une localisation inertielle consiste à élaborer des valeurs initiales d'attitude, de vitesse et de position de l'algorithme de localisation inertielle. Cette étape correspond à un mode des centrales inertielles appelé « Alignement ».

L'initialisation d'une localisation inertielle comprend un grand nombre de variantes, fonction des applications, et classées en deux catégories :

- l'alignement statique dans le cas d'un porteur ne se déplaçant pas,
- l'alignement en mouvement dans le cas d'un porteur mobile sur Terre.

Les mouvements du porteur pendant un alignement statique dégradent la précision de l'initialisation de la navigation. La plupart des applications intègrent une fonction de détection de mouvements pour vérifier l'immobilité du porteur et sécuriser l'alignement de la navigation inertielle. Divers algorithmes exploitent les mesures inertielles pour détecter les mouvements du porteur. Ils peuvent exploiter en complément des informations de type « Weight on Wheels (WoW) », frein de parking (véhicule terrestre ou aéronef), puissance sur le rotor (hélicoptère), pas collectif (hélicoptère), etc.

Le pouvoir de détection des algorithmes de détection de mouvement dépend du type de mouvement. Pour le cas des mouvements oscillatoires basse fréquence, les tests de mouvement actuels, de par la précision limitée des capteurs inertiels utilisés par la localisation inertielle, ne suffisent pas à assurer la robustesse de l'algorithme d'alignement statique.

On rappelle ci-dessous quelques résultats connus sur les régresseurs des moindres carrés car ils constituent un moyen d'estimer l'initialisation d'une localisation inertielle par observation des vitesses inertielles ou par observation des déplacements inertiels entretenus par intégration des vitesses inertielles.

Sur porteur statique ou quasi-statique et après une phase d'alignement grossier, les erreurs de vitesse horizontales d'une localisation inertielle peuvent être modélisées par des polynômes qui sont fonction de la durée d'alignement et qui sont d'ordre 2 pour chacun des axes horizontaux. Les coefficients de ces 2 polynômes permettent d'estimer les erreurs d'attitude et de vitesse de la localisation inertielle et donc de réaliser l'alignement. De la même façon, les erreurs de déplacements horizontaux d'une localisation inertielle peuvent être modélisées par des polynômes fonction de la durée d'alignement et d'ordre 3 pour chacun des axes horizontaux. Les coefficients de ces 2 polynômes permettent d'estimer les erreurs d'attitude et de vitesse de la localisation inertielle et donc de réaliser l'alignement. L'utilisation d'un régresseur exploitant les déplacements inertiels est bien adaptée au cas de mouvements porteurs oscillatoires.

De plus, il est bien connu que l'estimation de l'erreur de cap de la localisation inertielle est très sensible aux mouvements du porteur car elle s'appuie sur la rotation terrestre qui est un signal physique beaucoup plus difficile à mesurer que la gravité terrestre. Cette estimation de cap est déduite de la courbure pour un régresseur observant les vitesses inertielles ou du coefficient polynomial d'ordre 3 pour un régresseur observant les déplacements inertiels.

Les filtres de Kalman constituent également un moyen classique d'estimer l'initialisation d'une localisation inertielle. Un avantage connu des régresseurs des moindres carrés par rapport aux filtres de Kalman est que l'on sait borner simplement l'effet sur l'alignement d'un mouvement parasite sous hypothèse que ce mouvement soit d'amplitude connue et bornée.

Les documents US 2014/372063 A1 et EP 1 862 764 A1 décrivent chacun un procédé d'alignement d'une centrale inertielle porte par un porteur statique ou quasi-statique pendant une durée d'observation afin de vérifier une précision des informations d'alignement

Le tableau ci-dessous rappelle l'impact maximal sur le coefficient polynomial cmax ou dmax d'ordre le plus élevé pour les régresseurs d'ordre 2 et 3 qui observent un signal d'amplitude bornée V en vitesse ou D en déplacement. On sait que l'impact maximal est atteint pour un signal qui commute entre ses bornes (+ ou - V si observation des erreurs de vitesse, + ou - D si observations des déplacements) exactement 2 fois pour un régresseur d'ordre 2 ou 3 fois pour un régresseur d'ordre 3.

| | Régresseur des moindres carrés d'ordre 2 | Régresseur des moindres carrés d'ordre 3 |
|---|---|---|
| Instants de commutation | 2 instants de commutation qui sont notés u1 et u2 : $u1 = 1/2 - \dfrac{\sqrt{3}}{6}$ $u2 = 1/2 + \dfrac{\sqrt{3}}{6}$ | 3 instants de commutation qui sont notés u1, u2 et u3 : $u1 = 1/2 - \dfrac{\sqrt{15}}{10}$ $u2 = 1/2$ $u3 = 1/2 + \dfrac{\sqrt{15}}{10}$ |
| Terme maximal d'ordre le plus élevé | $c_{\max} = \dfrac{20 \cdot V}{\sqrt{3} \cdot T^2}$ | $d_{\max} = \dfrac{91 \cdot D}{2 \cdot T^3}$ |

où **T** représente la durée de la régression temporelle et u représente le temps normalisé u= t / T.

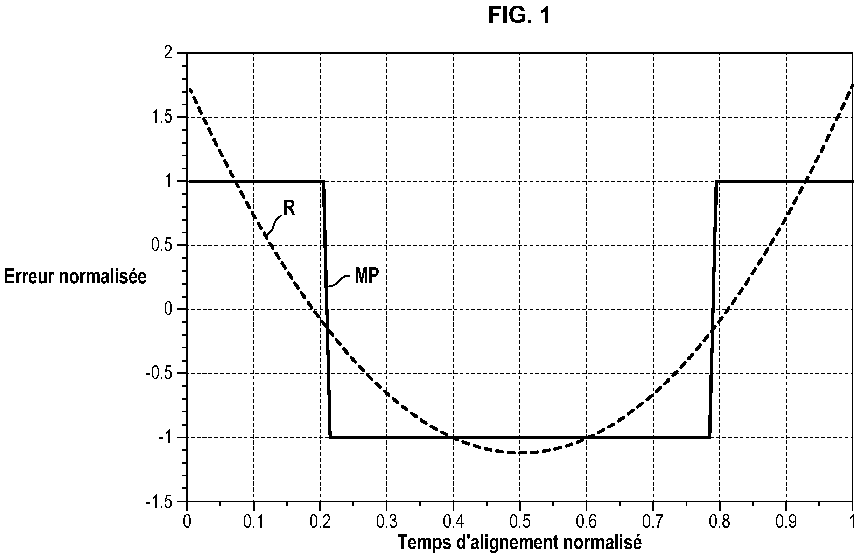

La figure 1 présente un scénario pour le modèle d'ordre 2 (il existe un second scénario symétrique). En abscisse, le temps normalisé u et en ordonnée, l'erreur normalisée égale à erreur / V.

Sur cette figure, la courbe MP représente le mouvement correspondant au pire cas. La courbe R est celle du régresseur d'ordre 2.

Sur la courbe, le mouvement du porteur commute 2 fois entre ses bornes. Ceci engendre ainsi l'erreur de courbure maximale cmax sur l'estimation polynomiale d'ordre 2.

On sait que la dérive inertielle maximale induite par les mouvements du porteur est ainsi égale à :

$$derive\_inertielle\_maximale = \frac{2c_{\max}}{g} = \frac{40V}{\sqrt{3}gT^2}$$

où g représente la gravité terrestre.

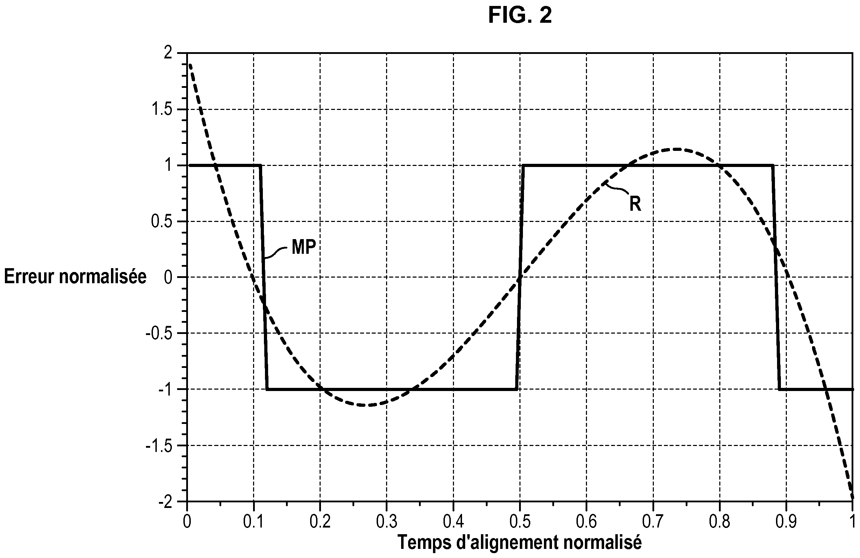

La figure 2 illustre quant à elle un scénario pour le modèle d'ordre 3. En abscisse, le temps normalisé u, en ordonnée, l'erreur normalisée égale à erreur / D.

Le mouvement du porteur commute 3 fois (courbe MP) entre ses bornes (+ ou - D). Ceci engendre ainsi l'erreur maximale dmax sur le coefficient d'ordre 3 de l'estimation polynomiale d'ordre 3 (courbe R). On sait que la dérive inertielle maximale induite par les mouvements du porteur est ainsi égale à

$$derive\_inertielle\_maximale = \frac{6 \cdot d_{\max}}{g} = \frac{273 \cdot D}{g \cdot T^3}$$

Quel que soit le régresseur, la dérive inertielle maximale induite par les mouvements du porteur doit rester faible devant la précision des capteurs inertiels. Un ordre de grandeur que l'on considère habituellement est que la dérive induite par les mouvements doit être inférieure au tiers de la dérive des gyros utilisés par la localisation inertielle car 1/3 en somme RMS engendre 10 % environ de dégradation.

Ainsi, pour une amplitude donnée des mouvements du porteur, l'alignement est d'autant moins perturbé qu'il est réglé pour une durée d'observation T élevée. Ce résultat s'applique également pour les autres types d'estimateurs en particulier à base de filtre de Kalman.

## PRESENTATION GENERALE DE L'INVENTION

Un but général de l'invention est de proposer un procédé d'alignement qui ne présente pas les inconvénients de l'état de la technique et qui permette d'améliorer la robustesse aux mouvements parasites.

Notamment, un but de l'invention est de proposer un procédé d'alignement permettant une dérive inertielle maximale induite par les mouvements du porteur faible devant la précision des capteurs inertiels.

La présente invention propose de réaliser simultanément plusieurs alignements (par régression des moindres carrés, par filtrage de Kalman ou à l'aide de tout autre estimateur des erreurs d'une localisation inertielle) dimensionnés pour plusieurs amplitudes de mouvements oscillatoires basses fréquences et de sélectionner l'alignement de durée minimale dont la cohérence a été vérifiée par une consolidation inter-alignements.

Il est ainsi proposé un procédé d'alignement d'une centrale inertielle portée par un porteur statique ou quasi-statique selon la revendication 1.

Un tel procédé est avantageusement complété par les différentes caractéristiques suivantes prises seules ou en combinaison :

- les informations d'alignement retenues sont les dernières informations d'alignement déterminées pour la durée d'observation minimale ;
- les informations d'alignement retenues sont une moyenne entre les dernières informations d'alignement déterminées pour la durée d'observation minimale et des informations d'alignement déterminées juste avant par le même traitement et pour la même durée d'observation minimale ;
- les informations d'alignement retenues sont des informations d'alignement déterminées avec un traitement :

    • qui est dimensionné pour la même amplitude de mouvements de porteur que le traitement d'alignement mis en oeuvre avec la durée minimale d'observation sélectionnée, et
    • qui est mis en oeuvre pour une durée d'observation plus longue.

L'invention concerne également un système inertiel, caractérisé en ce qu'il comporte des moyens de traitement adaptés pour mettre en oeuvre le procédé précité.

## PRESENTATION DES FIGURES

D'autres caractéristiques et avantages de l'invention ressortiront encore de la description qui suit, laquelle est purement illustrative et non limitative, et doit être lue en regard des figures annexées sur lesquelles :

- Les figures 1 et 2 représentent schématiquement chacune, d'une part une courbe du mouvement le plus défavorable du porteur et d'autre part une courbe donnant l'erreur de courbure maximale dans le cas d'une estimation polynomiale d'ordre 2 et d'une estimation polynomiale d'ordre 3 ;
- Les figures 3a et 3b illustrent deux modes de réalisation possibles pour un système inertiel conforme à différents modes de l'invention ;
- La figure 4 est une représentation schématique donnant les différentes étapes d'un traitement possible pour la mise en oeuvre de l'invention ;
- Les figures 5 à 7 illustrent trois modes de mise en oeuvre possibles pour l'invention.

## DESCRIPTION DETAILLEE DE L'INVENTION

*Généralités sur le système inertiel*

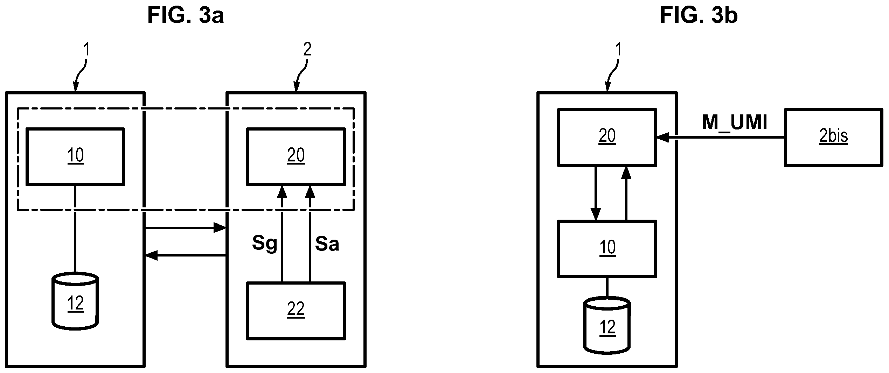

Dans un premier mode de réalisation, en référence à la figure 3a, un système (inertiel) comprend une unité de traitement 1 et une centrale inertielle de navigation 2.

L'unité de traitement 1 de données comprend typiquement au moins un processeur pour mettre en oeuvre un programme d'ordinateur. Ce programme d'ordinateur comprend des instructions de code de programme configurées pour mettre en oeuvre le dispositif d'alignement amélioré 10. Cette unité de traitement peut partager celle de la centrale inertielle 2 montée sur un porteur statique ou animé de mouvements parasites tel qu'un véhicule, un bateau ou un aéronef. La centrale inertielle 2 comprend une unité de navigation 20 et des capteurs inertiels 22. La centrale inertielle 2 peut également comprendre une interface utilisateur.

Les capteurs inertiels 22 comprennent par exemple des accéléromètres fournissant des mesures Sa et des gyromètres fournissant des mesures Sg.

L'unité de navigation 20, connue en elle-même, est notamment configurée pour mettre en oeuvre une localisation inertielle et un alignement grossier qui réalise l'estimation des attitudes à quelques degrés près conformément à un procédé connu de l'état de la technique. L'unité de navigation 20 comprend par exemple au moins un processeur configuré pour exécuter un algorithme d'entretien de la localisation inertielle. Par ailleurs, le dispositif d'alignement amélioré 10 et l'unité de navigation 20 peuvent être des composants physiques autonomes ou regroupés au sein d'un même boîtier.

L'unité de traitement 1 comprend par ailleurs une mémoire 12 pour mémoriser des données, notamment des mesures reçues de la centrale inertielle 2.

En variante (figure 3b), le système comprend une unité de traitement 1 et une Unité de Mesures Inertielles 2bis appelée également UMI.

*Exemples de traitement d'alignement*

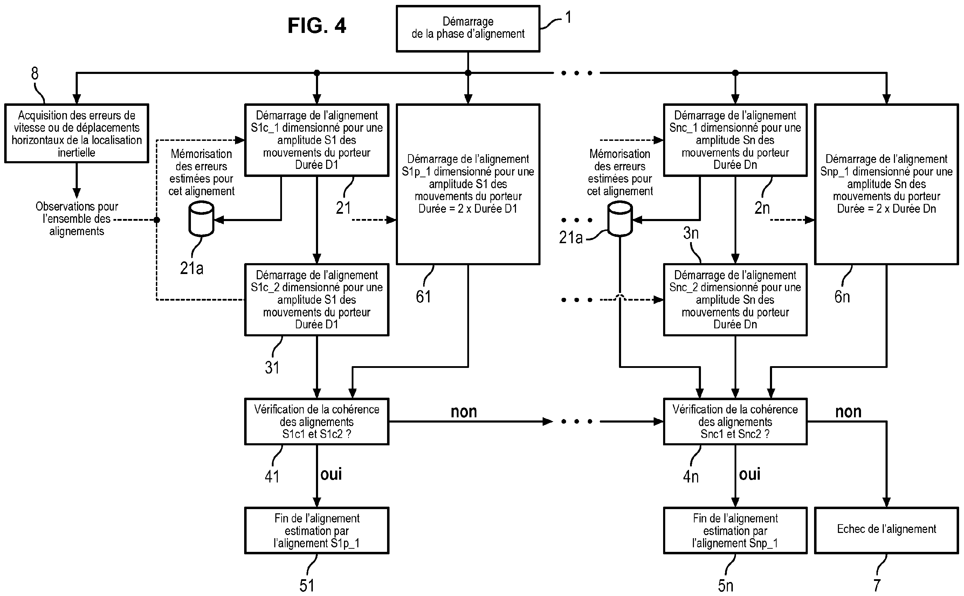

Le système représenté sur les figures 3a ou 3b met par exemple en oeuvre les différentes étapes représentées sur la figure 4.

Dans une première étape, la phase d'alignement est démarrée et une initialisation des informations d'alignement est réalisée (étape 1). Les valeurs initiales d'attitude, et de vitesse et éventuellement de position utilisées sont par exemple des données brutes d'acquisition fournies par différents capteurs du porteur sur lequel le système est placé. De nombreuses autres techniques sont bien entendu possibles pour cette initialisation.

À l'issue de cette étape 1, le système lance en parallèle différents traitements d'alignement (en l'occurrence référencés de 1 à n sur la figure, avec n nombre entier fini).

Chacun de ces traitements correspond à des durées d'observation (D1,..., Dn) différentes.

Ils sont en outre dimensionnés avec des amplitudes de mouvement de porteur différentes.

Ainsi, pour une première durée d'observation D1 :

- le système calcule un premier jeu d'informations d'alignement S1c_1 en mettant en oeuvre un traitement d'alignement (étape 21) dimensionné pour une amplitude S1 des mouvements du porteur ; ce calcul se fait à partir des données initiales fournies à l'étape 1 et des erreurs de vitesse et/ou déplacements horizontaux de la localisation inertielle acquises à l'étape 8 ; le jeu d'informations S1c_1 obtenu est mémorisé (étape 21a) ;
- le calcul de l'étape 21 est ensuite itéré, une ou plusieurs fois, en utilisant à chaque fois le jeu d'informations obtenu avec le traitement d'alignement précédent comme données d'entrée (le jeu d'informations d'alignement S1c_1 pour le calcul du jeu d'informations d'alignement S1c_2 dans le cas de l'étape 31) ; le traitement est à chaque fois identique à celui mis en oeuvre dans l'étape 21 (même dimensionnement S1 en amplitude et même durée D1) ;
- à la fin des itérations, une vérification de cohérence est mise en oeuvre entre les informations d'alignement obtenues (étape 41). Par exemple, dans le cas de la figure 4 où il n'y a qu'une itération, on vérifie la cohérence des deux derniers jeux d'informations d'alignement S1c_1 et S1c_2 obtenus ;
- lorsque le résultat de l'étape de vérification est que les informations sont considérées comme cohérentes, l'alignement est considéré comme acceptable et comme terminé (étape 51) ; un jeu de valeurs d'alignement est alors déterminé ; ce jeu d'alignement peut correspondre au dernier jeu S1c_2 d'informations d'alignement obtenu pour ce traitement ou à un jeu recalculé en fonction de ce jeu d'informations S1c_2 et d'un ou plusieurs autres jeux d'informations déterminés en parallèle pour des durées d'observation supérieures (étape 61) (par exemple un traitement d'alignement de précision S1p_1 mis en oeuvre avec un dimensionnement S1 pour le mouvement des porteurs et une durée plus longue que D1 (par exemple 2 fois la durée D1) - voir infra).

Comme on l'aura compris, le système met en oeuvre en parallèle des étapes similaires pour une ou plusieurs autres durées d'observation toutes distinctes les unes des autres avec différents traitements d'alignement dimensionnés pour différentes amplitudes.

Notamment, pour la durée d'observation Dn et un dimensionnement d'amplitude Sn, il met en oeuvre les étapes suivantes en parallèle aux étapes 21 à 61 :

- étapes 2n et 2na : calcul d'un premier jeu d'informations d'alignement Snc_1 et mémorisation ;
- étape 3n : itération et calcul notamment d'un alignement Snc_2 ;
- étape 4n : vérification de cohérence ;
- étape 5n : fin de l'alignement et sortie d'un jeu d'informations d'alignement estimé,
- étape 6n : traitement d'alignement mis en oeuvre en parallèle pour une durée plus grande que Dn (par exemple 2 fois Dn) et pour le même dimensionnement Sn d'amplitude.

Dans l'exemple sur la figure 4, lorsque le résultat de la vérification menée à l'étape 41 est que les informations d'alignement obtenues ne sont pas cohérentes, on déclenche la vérification pour la durée d'observation juste supérieure et on itère ce processus de vérification en changeant successivement de durée jusqu'à trouver une durée d'observation pour laquelle la cohérence est vérifiée. Bien entendu, ces différents traitements de vérification peuvent être menés en parallèle.

Si aucun des traitements menés pour les différentes durées D1, ..., Dn ne permet de vérifier une cohérence, il y a échec de l'alignement. Un message en ce sens est fourni (étape 7 en sortie du test de cohérence Sn de la durée Dn la plus élevée).

Les différentes durées D1, ..., Dn sont par exemple choisies selon une suite géométrique.

Le nombre n de durées choisies peut typiquement être compris entre 3 et 5.

Par exemple : D1= 2 min 30 s, D2= 5 min, D3=10 min, D4= 15 min, D5= 30 min.

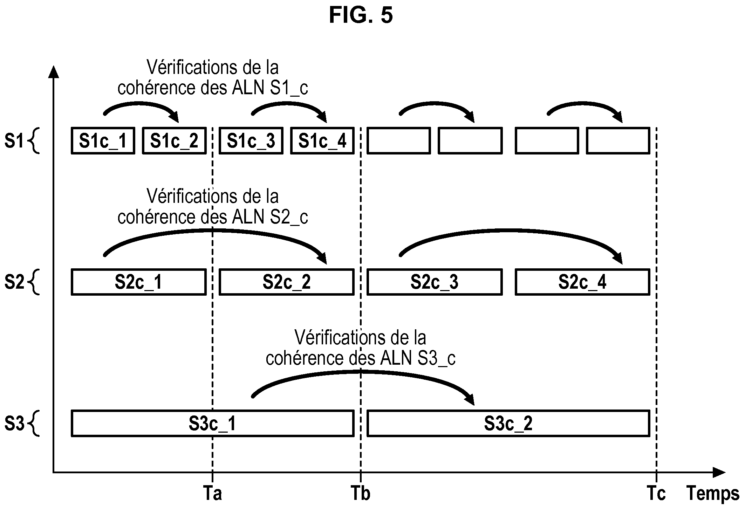

Dans le cas illustré sur la figure 5, le traitement d'alignement utilise trois durées d'alignement choisies selon une suite géométrique de raison 2.

A l'instant Ta, on peut vérifier la cohérence des informations estimées par les alignements dimensionnés pour une amplitude S1 des mouvements porteur n° S1c_1 et S1c_2.

En cas de cohérence, l'alignement est terminé et l'on peut fournir les informations du dernier alignement S1c_2 ou bien la moyenne des informations des 2 alignements S1c_1 et S1c_2.

En cas d'incohérence, 2 choix sont possibles :

- mise en place d'un effet cliquet en n'exploitant plus les alignements dimensionnés pour une amplitude S1 des mouvements porteur.
- on continue à exploiter les alignements dimensionnés pour une amplitude S1 des mouvements porteur car les mouvements du porteur ne sont pas forcément stationnaires. La description de cet exemple se fait avec ce choix.

L'alignement se prolonge alors en exploitant les alignements dimensionnés pour une amplitude S2 des mouvements porteur.

A l'instant Tb, on peut vérifier la cohérence des informations estimées par les alignements S2c_1 et S2c_2.

En cas de cohérence, l'alignement est terminé et l'on peut fournir les informations du dernier alignement S2c_2 ou bien la moyenne des informations des 2 alignements S2c_1 et S2c_2.

En cas d'incohérence, l'alignement se prolonge en exploitant les alignements dimensionnés pour une amplitude S3 des mouvements porteur.

A l'instant Tc, on peut vérifier la cohérence des informations estimées par les alignements S3c_1 et S3c_2.

En cas de cohérence, l'alignement est terminé et l'on peut fournir les informations du dernier alignement S3c_2 ou bien la moyenne des informations des 2 alignements S3c_1 et S3c_2.

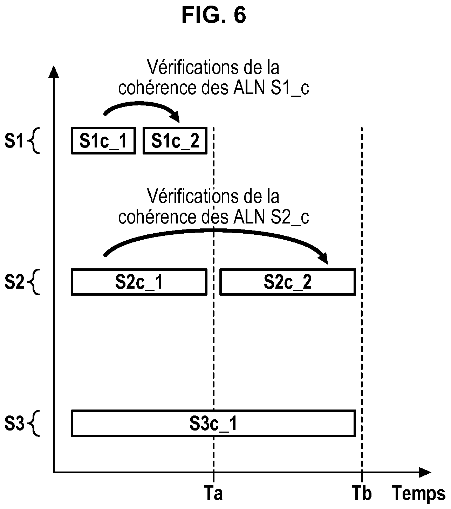

L'exemple illustré sur la figure 6 constitue une variation du premier exemple en faisant l'hypothèse que l'amplitude S3 est toujours plus grande que l'amplitude des mouvements porteurs.

Dans ce cas, il est inutile de vérifier la cohérence de l'alignement dimensionné pour une amplitude S3 des mouvements porteurs. Aucune vérification n'est alors mise en oeuvre pour cette amplitude.

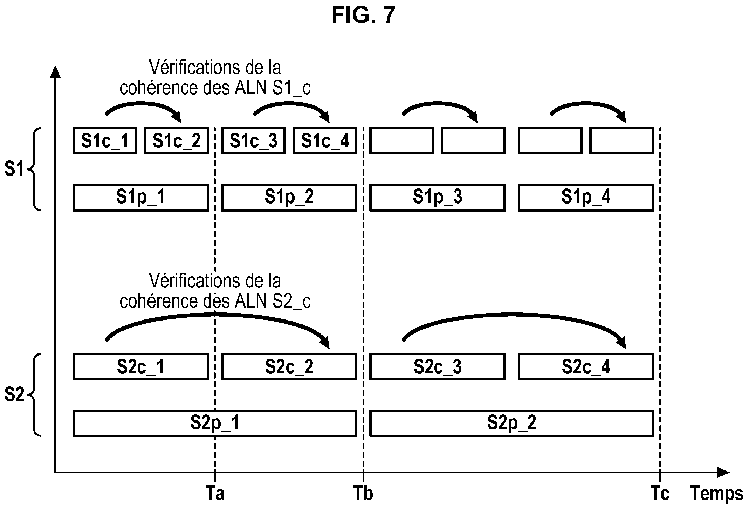

En variante encore (figure 7), on peut également améliorer ce premier exemple en ajoutant des alignements dédiés à la précision notés S1p_* et S2p* (* représente le numéro de réalisation de l'alignement). Les alignements dédiés à la cohérence sont notés S1c_* et S2c_*.

Les alignements de type S1p_* sont réglés de la même façon que les alignements de type S1c_* excepté qu'ils continuent à observer sur une durée 2 deux fois plus grande: en cas de cohérence des 2 alignements S1c_1 et S1c_2, l'alignement est terminé et correspond à l'estimation donnée par S1p_1. En cas d'incohérence de ces alignements, on teste la cohérence des 2 alignements S2c_1 et S2c_2.

Si ces alignements sont cohérents alors l'alignement est terminé et correspond à l'estimation donnée par S2p_1.

*Vérification de cohérence*

La vérification de la cohérence entre 2 alignements dans les différents exemples présentés utilise des tests sur les valeurs absolues des écarts des estimées sur les erreurs de vitesses horizontales et sur les 3 erreurs d'attitudes vis-à-vis des précisions des estimées des 2 alignements. Ainsi il est possible d'utiliser les traitements suivants pour réaliser la vérification de la cohérence.

```
SI (l'alignement n°1 a échoué)
OU (l'alignement n°2 a échoué)
OU abs(Erreur de vitesse Axe X de l'aln n°1 - Erreur de vitesse Axe X de l'aln n°2) > S_VX
OU abs(Erreur de vitesse Axe Y de l'aln n°1- Erreur de vitesse Axe Y de l'aln n°2) > S_VY
OU abs(Erreur d'attitude Axe X de l'aln n°1- Erreur d'attitude Axe X de l'aln n°2) > S_AX
OU abs(Erreur d'attitude Axe Y de l'aln n°1- Erreur d'attitude Axe Y de l'aln n°2) > S_AY
OU abs(Erreur d'attitude Axe Z de l'aln n°1- Erreur d'attitude Axe Z de l'aln n°2) > S_AZ
ALORS
          Cohérence = KO
SINON
          Cohérence = OK
```

(suite)

| FIN SI |
| --- |

Les seuils S_VX, S_VY, S_AX, S_AY et S_AZ sont calculés de la façon suivante :

$$S\_VX = K * RacineCarrée(\ (Incertitude\ sur\ l'erreur\ de\ vitesse\ Axe\ X\ de\ l'aln\ n°1)^2$$
$$+ (Incertitude\ sur\ l'erreur\ de\ vitesse\ Axe\ X\ de\ l'aln\ n°2)^2)$$

$$S\_VY = K * RacineCarrée(\ (Incertitude\ sur\ l'erreur\ de\ vitesse\ Axe\ Y\ de\ l'aln\ n°1)^2$$
$$+ (Incertitude\ sur\ l'erreur\ de\ vitesse\ Axe\ Y\ de\ l'aln\ n°2)^2)$$

$$S\_AX = K * RacineCarrée(\ (Incertitude\ sur\ l'erreur\ d'attitude\ Axe\ X\ de\ l'aln\ n°1)^2$$
$$+ (Incertitude\ sur\ l'erreur\ d'attitude\ Axe\ X\ de\ l'aln\ n°2)^2)$$

$$S\_AY = K * RacineCarrée(\ (Incertitude\ sur\ l'erreur\ d'attitude\ Axe\ Y\ de\ l'aln\ n°1)^2$$
$$+ (Incertitude\ sur\ l'erreur\ d'attitude\ Axe\ Y\ de\ l'aln\ n°2)^2)$$

$$S\_AZ = K * RacineCarrée(\ (Incertitude\ sur\ l'erreur\ d'attitude\ Axe\ Z\ de\ l'aln\ n°1)^2$$
$$+ (Incertitude\ sur\ l'erreur\ d'attitude\ Axe\ Z\ de\ l'aln\ n°2)^2)$$

où K est une constante fixe choisie en fonction de la probabilité de fausse alarme Pfa souhaitée c'est-à-dire en fonction de la probabilité de déclarer deux alignements incohérents à tort. Habituellement, la probabilité de fausse alarme est calculée à partir du quantile d'une loi gaussienne. De même, le biais minimal détecté avec une probabilité de non détection Pnd est calculé à partir du risque de seconde espèce d'une loi gaussienne. Le tableau suivant donne quelques valeurs possibles pour la constante de réglage K ainsi que la valeur du biais minimal détectable K2 pour une Pnd choisie égale à 0,1 %.

| Pfa | K | K2 pour Pnd= 0,1% |
| --- | --- | --- |
| 0,1 % | 3,29 | 6,38 |
| 0,01 % | 3,89 | 6,98 |
| 0,001 % | 4,42 | 7,51 |

Les valeurs minimales détectables sur les erreurs de vitesse et d'attitude de la localisation inertielle sont calculées de la façon suivante:

$$VX\_détect = K2 * RacineCarrée(\ (Incertitude\ sur\ l'erreur\ de\ vitesse\ Axe\ X\ de\ l'aln\ n°1)^2$$
$$+ (Incertitude\ sur\ l'erreur\ de\ vitesse\ Axe\ X\ de\ l'aln\ n°2)^2)$$

$$VY\_détect = K2 * RacineCarrée(\ (Incertitude\ sur\ l'erreur\ de\ vitesse\ Axe\ Y\ de\ l'aln\ n°1)^2$$
$$+ (Incertitude\ sur\ l'erreur\ de\ vitesse\ Axe\ Y\ de\ l'aln\ n°2)^2)$$

$$AX\_détect = K2 * RacineCarrée(\ (Incertitude\ sur\ l'erreur\ d'attitude\ Axe\ X\ de\ l'aln\ n°1)^2$$
$$+ (Incertitude\ sur\ l'erreur\ d'attitude\ Axe\ X\ de\ l'aln\ n°2)^2)$$

$$AY\_détect = K2 * RacineCarrée(\ (Incertitude\ sur\ l'erreur\ d'attitude\ Axe\ Y\ de\ l'aln\ n°1)^2$$
$$+ (Incertitude\ sur\ l'erreur\ d'attitude\ Axe\ Y\ de\ l'aln\ n°2)^2)$$

$$AZ\_détect = K2 * RacineCarrée(\quad (\text{Incertitude sur l'erreur d'attitude Axe Z de l'aln n°1})^2$$
$$+ (\text{Incertitude sur l'erreur d'attitude Axe Z de l'aln n°2})^2)$$

**Revendications**

1. Procédé d'alignement d'une centrale inertielle portée par un porteur statique ou quasi-statique, **caractérisé en ce que**:

   - on met en oeuvre simultanément plusieurs traitements d'alignement dimensionnés pour plusieurs amplitudes de mouvements oscillatoires basses fréquences du porteur avec des durées d'observation d'alignement distinctes,
   - on détermine une durée minimale d'observation qui correspond à la durée d'observation d'alignement pour laquelle une cohérence entre deux informations d'alignement obtenues au moyen de traitements d'alignement dimensionnés pour une amplitude donnée du mouvement oscillatoire basse fréquence du porteur est vérifiée,
   - on détermine les informations d'alignement en fonction des informations d'alignement déterminées pour cette durée minimale d'observation.

2. Procédé selon la revendication 1, dans lequel les informations d'alignement déterminées sont les dernières informations d'alignement déterminées pour la durée d'observation minimale.

3. Procédé selon la revendication 1, dans lequel les informations d'alignement déterminées sont une moyenne entre les dernières informations d'alignement déterminées pour la durée d'observation minimale et des informations d'alignement déterminées précédemment par le même traitement et pour la même durée d'observation minimale.

4. Procédé selon la revendication 1, dans lequel les informations d'alignement déterminées sont des informations d'alignement déterminées avec un traitement :

   - qui est dimensionné pour l'amplitude de mouvements oscillatoires basses fréquences de porteur du traitement d'alignement mis en oeuvre avec la durée minimale d'observation sélectionnée, et
   - qui est mis en oeuvre pour une durée d'observation plus longue.

5. Procédé selon la revendication 4, dans lequel la période d'observation plus longue est égale à deux fois la période d'observation minimale.

6. Procédé selon l'une des revendications précédentes, dans lequel les durées d'observation des différents traitements d'alignement sont choisies selon une suite géométrique.

7. Procédé selon la revendication 6, dans lequel la suite géométrique est de raison 2.

8. Procédé selon l'une des revendications précédentes, dans lequel des informations d'alignement comportent des valeurs d'attitude et/ou de vitesse et/ou de position.

9. Système inertiel, **caractérisé en ce qu'**il comporte des moyens de traitement adapté pour mettre en œuvre le procédé selon l'une des revendications précédentes.

**Patentansprüche**

1. Ausrichtungsverfahren eines Trägheitsnavigationssystems, das von einem statischen oder quasi-statischen Träger getragen ist, **dadurch gekennzeichnet, dass**:

   - gleichzeitig mehrere Ausrichtungsbehandlungen umgesetzt werden, die für mehrere oszillatorische Bewegungsamplituden niedriger Frequenzen des Trägers mit unterschiedlichen Ausrichtungsbeobachtungs-Dauern ausgelegt werden,
   - eine minimale Beobachtungsdauer bestimmt wird, die der Ausrichtungsbeobachtungs-Dauer entspricht, für die eine Kohärenz zwischen zwei Ausrichtungsinformationen, die mittels Ausrichtungsbearbeitungen erreicht werden, die für eine bestimmte Amplitude der oszillatorischen Bewegungsamplitude niedriger Frequenz ausgelegt sind, überprüft wird,
- die Ausrichtungsinformationen in Abhängigkeit von den Ausrichtungsinformationen bestimmt werden, die für diese minimale Beobachtungsdauer bestimmt werden.

2. Verfahren gemäß Anspruch 1, bei dem die bestimmten Ausrichtungsinformationen die letzten Ausrichtungsinformationen sind, die für die minimale Beobachtungsdauer bestimmt werden.

3. Verfahren gemäß Anspruch 1, bei dem die bestimmten Ausrichtungsinformationen ein Durchschnitt zwischen den letzten bestimmten Ausrichtungsinformationen für die minimale Beobachtungsdauer und Ausrichtungsinformationen werden, die zuvor von derselben Bearbeitung und für dieselbe minimale Beobachtungsdauer bestimmt sind.

4. Verfahren gemäß Anspruch 1, bei dem die bestimmten Ausrichtungsinformationen bestimmte Ausrichtungsinformationen mit einer Bearbeitung sind:

- das für die oszillatorische Bewegungsamplitude niedriger Frequenzen des Trägers der Ausrichtungsbearbeitung ausgelegt ist, der mit der minimalen ausgewählten Beobachtungsdauer umgesetzt wird, und
- das für eine längere Beobachtungsdauer umgesetzt wird.

5. Verfahren gemäß Anspruch 4, bei dem die längere Beobachtungsperiode gleich dem Zweifachen der minimalen Beobachtungsperiode ist.

6. Verfahren gemäß einem der voranstehenden Ansprüche, bei dem die Beobachtungsdauern der unterschiedlichen Ausrichtungsbearbeitungen gemäß einer geometrischen Folge ausgewählt sind.

7. Verfahren gemäß Anspruch 6, bei dem die geometrische Folge die Größenordnung von 2 aufweist.

8. Verfahren gemäß einem der voranstehenden Ansprüche, bei dem die Ausrichtungsinformationen Einstellungs- und / oder Geschwindigkeits- und / oder Positionswerte umfassen.

9. Trägheitsnavigationssystem, **dadurch gekennzeichnet, dass** es Bearbeitungsmittel umfasst, die geeignet sind, um das Verfahren gemäß einem der voranstehenden Ansprüche umzusetzen.

**Claims**

1. A method for aligning an inertial unit carried by a static or quasi-static carrier, **characterised by**:

- simultaneously implementing several alignment processing operation operations dimensioned for several amplitudes of low-frequency oscillatory motions of the carrier with distinct alignment observation durations,
- determining a minimum observation duration which corresponds to the alignment observation duration for which a coherence between two pieces of alignment information obtained by means of alignment processing operation operations dimensioned for a given amplitude of the low frequency oscillatory motion of the carrier is fulfilled,
- determining the alignment information as a function of the alignment information determined for this minimum observation duration.

2. The method according to claim 1, wherein the alignment information determined is the last alignment information determined for the minimum observation duration.

3. The method according to claim 1, wherein the alignment information determined is an average between the last alignment information determined for the minimum observation duration and alignment information previously determined by the same processing operation and for the same minimum observation duration.

4. The method according to claim 1, wherein the alignment information determined is alignment information determined with a processing operation:

- which is dimensioned for the amplitude of the low frequency oscillatory motions of the carrier of the alignment processing operation implemented with the selected observation minimum duration, and
- which is implemented for a longer observation duration.

5. The method according to claim 4, wherein the longer observation period is equal to twice the minimum observation period.

6. The method according to one of the preceding claims, wherein the observation durations of the different alignment processing operation operations are chosen according to a geometric series.

7. The method according to claim 6, wherein the geometric series has a common ratio of 2.

8. The method according to one of the preceding claims, wherein the alignment information includes attitude and/or speed and/or position values.

9. An inertial unit, **characterised in that** it includes processing operation means adapted to implement the method according to one of the preceding claims.

FIG. 1

Erreur normalisée

Temps d'alignement normalisé

EP 3 526 551 B1

**FIG. 2**

R

MP

Erreur normalisée

Temps d'alignement normalisé

FIG. 3b

FIG. 3a

**FIG. 4**

EP 3 526 551 B1

**FIG. 5**

EP 3 526 551 B1

FIG. 6

## FIG. 7

Vérifications de la cohérence des ALN S1_c

Vérifications de la cohérence des ALN S2_c

S1

S1c_1  S1c_2  S1c_3  S1c_4

S1p_1  S1p_2  S1p_3  S1p_4

S2

S2c_1  S2c_2  S2c_3  S2c_4

S2p_1  S2p_2

Ta  Tb  Tc  Temps

EP 3 526 551 B1

**EP 3 526 551 B1**

## RÉFÉRENCES CITÉES DANS LA DESCRIPTION

**Documents brevets cités dans la description**

- US 2014372063 A1

- EP 1862764 A1